# EUROPÄISCHE PATENTSCHRIFT

(11) **EP 2 188 140 B1**
(45) Veröffentlichungstag und Bekanntmachung des Hinweises auf die Patenterteilung: **10.10.2012**
(21) Anmeldenummer: 08784399.1
(22) Anmeldetag: 30.07.2008
(51) Int. Cl.: B60G 7/00, B60G 21/055, F16C 7/00, B29C 45/14

(54) **KOPPELSTANGE FÜR EIN FAHRZEUG**
COUPLING BAR FOR A VEHICLE
BARRE D'ACCOUPLEMENT POUR UN VÉHICULE

(30) Priorität: 14.08.2007 DE 102007038494
(43) Veröffentlichungstag der Anmeldung: 26.05.2010
(73) Patentinhaber: ZF Friedrichshafen AG, 88038 Friedrichshafen (DE)
(72) Erfinder: BLADT, Ulrich, 49479 Ibbenbüren (DE); BEUTLER, Olaf, 49356 Diepholz (DE); LOHFINK, Günter, 38667 Bad Harzburg (DE); PALLUCK, Karl-Walter, 49401 Damme (DE); LOHEIDE, Stefan, 49134 Wallenhorst (DE); LAMLA, Dirk, 49565 Bramsche (DE); SCHÖNHOFF, Stefan, 49191 Belm (DE); MAASSMANN,Christian, 49586 Merzen (DE)
(86) Internationale Anmeldenummer: PCT/DE2008/050015
(87) Internationale Veröffentlichungsnummer: WO 2009/021504

(56) Entgegenhaltungen:
- EP-A- 0 726 177
- EP-A- 1 733 861
- DE-A1- 2 539 698
- DE-A1- 4 422 579
- DE-U- 1 973 796
- FR-A- 2 835 024
- FR-A- 2 862 559
- JP-A- 4 321 420
- US-A- 5 398 907
- US-B1- 6 698 963
- LUCOT-MAITROT N: "BIELLETTES ARTUCULEES EN ZYTEL: ECONOMIES ET GAIN DE POIDS" MECANIQUE INDUSTRIELLE ET MATERIAUX, VB PROMOTION, GARCHES, FR, Bd. 49, Nr. 1, 1. März 1996 (1996-03-01), Seite 42, XP000587340 ISSN: 1244-9091

## Beschreibung

Die Erfindung betrifft eine Koppelstange für ein Fahrzeug, mit einem Grundkörper, einem ein Lagergehäuse aufweisenden Lager, einem von dem Grundkörper gebildeten Gelenkgehäuse, welches einen Abstand zu dem Lagergehäuse aufweist, und einem von dem Grundköper gebildeten Koppelstück, welches sich zwischen dem Lagergehäuse und dem Gelenkgehäuse erstreckt und die beiden Gehäuse miteinander verbindet. Ferner betrifft die Erfindung ein Fahrzeug mit einer solchen Koppelstange sowie ein Verfahren zur Herstellung der Koppelstange.

Die DE 34 12 578 C1 offenbart eine Radaufhängung für Kraftfahrzeuge, bestehend aus zwei an ihren freien Enden je einen Achszapfen für ein Fahrzeug tragenden, um eine Querachse schwenkbaren, gegenüber dem Wagenkasten federnd abgestützten Längslenkern, welche in einem Abstand zu den fahrzeugseitigen Lagern mit einer elastisch tordierbaren, ein offenes Profil aufweisenden Querstrebe, insbesondere durch Schweißen winkelsteif verbunden sind. Die Querstrebe ist durch einen spezifisch leichten und widerstandsfreien Kunststoff zu einem Vollkörper mit geschlossenem Profil von windschnittiger Form vervollständigt. Um den weichelastischen Kunststoff vor mechanischer äußerer Beschädigung zu schützen, ist er mit einer wasserdichten schlagfesten Umhüllung versehen, die aus einer Kunststoffhaut bestehen kann.

Die DE 35 35 783 C2 beschreibt eine Hinterradaufhängung für Kraftfahrzeuge, bei der an den freien Enden von schwenkbar am Aufbau gelagerten Längslenkern die Radzapfen angeordnet sind und die Enden der Längslenker in der Nähe der Radzapfen mit einer profilförmigen Querstrebe verbunden sind. An einer Profilseite der Querstrebe ist ein sich im Wesentlichen über deren Länge und zumindest bis zu deren Unterkante erstreckendes Schutzelement gelenkig befestigt, das eine geneigte äußere Umfangsfläche aufweist, die von der Nähe der Unterkante der Querstrebe her aufwärts geneigt ist. Zwischen dem Schutzelement und der Querstrebe kann ein elastisches Element sitzen.

Aus der JP 4321420 A2 ist ein Stabilisator-Lenker mit einer Mehrzahl von Anbindungszapfen bekannt. Die Anbindungszapfen sind jeweils durch eine sie umschließende elastische Masse, die ebenfalls endseitige Verbindungsbereiche einer Kunststoff-Verbindungsstrebe umschließt, an diese Kunststoff-Verbindungsstreben angebunden.

In der EP 1 733 861 A2 ist eine Pendelstütze mit einem Kugelgelenk beschrieben. Der Lagersitz des Kugelgelenks wird dabei durch Umspritzen der Gelenkkugel des Kugelzapfens hergestellt.

Aus der DE 20 2005 004 964 U1 ist eine Aufhängung für eine Fahrzeugachse, mit einem starren Achskörper und mit je wenigstens einem Führungslenkerblatt beidseits der vertikalen Fahrzeuglängsmittelebene bekannt, welches mit seinem vorderen Ende an einem chassisfesten Lager angelenkt und im Abstand davon an dem Achskörper befestigt ist. Ein von dem Achskörper aus jeweils nach hinten ragender Tragarm bildet das untere Auflager für eine Feder, auf deren Oberseite sich das Chassis abstützt, wobei das wenigstens eine Führungslenkerblatt zumindest in einem Bereich zwischen seinem vorderen Ende und dem Achskörperbefestigungsbereich mit einem dauerelastischen Schutzüberzug versehen ist. Der auf Kunststoffbasis hergestellte Schutzüberzug kann den gesamten oder nahezu gesamten Bereich zwischen dem Lager und der Achskörperbefestigung einnehmen sowie das Führungslenkerblatt in dem Bereich, in welchem er vorgesehen ist, vollständig umschließen.

Die Koppelstange der eingangs genannten Art wird in Fahrzeugen zur Anbindung eines Wankstabilisators an einen Radführungslenker oder an einen Achsschenkel eingesetzt und ist mittels des Lagers an dem Wankstabilisator angelenkt. Dabei werden Versuche unternommen, den Grundkörper aus Kunststoff herzustellen und das Lagergehäuse darin zu integrieren. Wird aber das Lagergehäuse von dem Grundkörper gebildet und dieser insgesamt aus Kunststoff hergestellt, besteht die Gefahr, dass Steinschlag das Lagergehäuse beschädigt, wodurch die Koppelstange unbrauchbar werden kann.

Davon ausgehend liegt der Erfindung die Aufgabe zugrunde, eine Koppelstange der eingangs genannten Art derart weiterzubilden, dass eine solche Beschädigung des Lagergehäuses vermieden oder zumindest reduziert werden kann.

Diese Aufgabe wird erfindungsgemäß mit einer Koppelstange nach Anspruch 1 und mit einem Verfahren nach Anspruch 9 gelöst. Bevorzugte Weiterbildungen sind in den Unteransprüchen gegeben.

Die erfindungsgemäße Koppelstange für ein Fahrzeug, insbesondere Kraftfahrzeug, weist einen Grundkörper, ein ein Lagergehäuse umfassendes Lager, ein von dem Grundkörper gebildetes Gelenkgehäuse, welches einen Abstand zu dem Lagergehäuse aufweist, und ein von dem Grundkörper gebildetes Koppelstück auf, welches sich zwischen dem Lagergehäuse und dem Gelenkgehäuse erstreckt und die beiden Gehäuse miteinander verbindet, wobei von dem aus einem ersten Kunststoffmaterial bestehenden Grundkörper das Lagergehäuse gebildet ist, welches von einer aus einem zweiten Kunststoffmaterial bestehenden Ummantelung umgeben ist, das weicher als das erste Kunststoffmaterial ist.

Die Ummantelung ist somit weicher als der Grundkörper und bildet eine Weichkomponente, die durch ein hohes Energieaufnahmevermögen sehr resistent gegenüber Steinschlag und mechanischer Abrasion ist und ferner einen akustischen Vorteil bietet. Ein weiterer Vorteil ist darin zu sehen, dass gegenüber Konzepten, die separate Abschirmungen vorsehen, eine Gewichtsreduzierung sowie eine integrative Lösung erzielt werden kann. Der Ausdruck "weicher" ist insbesondere derart zu verstehen, dass das erste Kunststoffmaterial und somit der Grundkörper eine größere mechanische Steifigkeit als das zweite Kunststoffmaterial und somit als die Ummantelung aufweist.

Der Grundkörper kann insgesamt von der Ummantelung umgeben sein. Bevorzugt ist aber zumindest ein sich an das Lagergehäuse anschließender Bereich des Koppelstücks von der Ummantelung umgeben. Die Ummantelung kann dabei den Bereich des Koppelstücks vollständig umschließen. Ferner kann die Ummantelung das Lagergehäuse vollständig umschließen, wobei bevorzugt Bereiche ausgenommen sind, in denen sich ein Innenteil des Lagers (Lagerinnenteil) aus dem Lagergehäuse herauserstreckt. Insbesondere bildet die Ummantelung ein einstückiges Kunststoffbauteil. Auch kann das Gelenkgehäuse vollständig von der Ummantelung umschlossen sein, wobei bevorzugt ein Bereich ausgenommen ist, in dem sich ein Gelenkinnenteil aus dem Gelenkgehäuse herauserstreckt.

Die beiden Kunststoffmaterialen bestehen bevorzugt aus unterschiedlichen technischen Kunststoffen. Das erste Kunststoffmaterial besteht z.B. aus Polyamid (PA), Polyphthalamid (PPA), Polyphenylensulfid (PPS), Polyetherimid (PEI), Polyetheretherketon (PEEK) oder aus einem anderen technischen Kunststoff. Ferner kann das erste Kunststoffmaterial mit Fasern verstärkt und/oder mit Mineralanteilen versetzt sein. Bevorzugt handelt es sich bei dem ersten Kunststoffmaterial um ein glasfaserverstärktes Polyamid, wie z.B. PA6 GFX oder PA 6.6 GF 30.

Das zweite Kunststoffmaterial besteht z.B. aus Polyuretan (PUR) oder aus einem anderen technischen Kunststoff, wie z.B. einem Elastomer oder einem thermoplastischen Elastomer (TPE). Insbesondere ist das zweite Kunststoffmaterial nicht mit Fasern verstärkt.

Das Lager ist als Elastomerlager ausgebildet und weist eine Hülse sowie einen die Hülse umgebenden oder umringenden Elastomerkörper auf, der zwischen der Hülse und dem Lagergehäuse angeordnet ist, wobei die Hülse insbesondere aus Metall besteht. Der Elastomerkörper ist bevorzugt fest mit der Hülse verbunden. Ferner kann der Elastomerkörper fest mit dem Lagergehäuse verbunden sein. Bevorzugt ist das Elastomerlager ein Gummilager und der Elastomerkörper ein Gummikörper. Die Hülse bildet, insbesondere in Kombination mit dem Elastomerkörper, das Lagerinnenteil, welches sich bevorzugt beidseitig aus dem Lagergehäuse herauserstreckt.

In dem Gelenkgehäuse ist bevorzugt ein Gelenkinnenteil, wie z.B. ein Gelenkzapfen, bewegbar gelagert, das zusammen mit dem Gelenkgehäuse ein Gelenk bildet. Die Lagerung des Gelenkinnenteils in dem Gelenkgehäuse erfolgt insbesondere unter Zwischenschaltung einer Lagerschale, die bevorzugt in dem Gelenkgehäuse angeordnet oder in dieses integriert und/oder von dem Grundkörper gebildet ist. Das Gelenkinnenteil ist insbesondere ein Kugelzapfen, der eine Gelenkkugel aufweist und mit dieser drehbar und/oder schwenkbar in der Lagerschale gelagert ist. Die Lagerschale ist bevorzugt eine Kugelschale.

Das Lagergehäuse ist insbesondere an einem ersten Ende des Grundkörpers angeordnet, und das Gelenkgehäuse ist insbesondere an einem zweiten Ende des Grundkörpers angeordnet.

Bevorzugt bilden das Lagergehäuse, das Gelenkgehäuse und das Koppelstück zusammen ein einstückiges Kunststoffbauteil, welches insbesondere den Grundkörper bildet. Insbesondere ist auch die Lagerschale Teil dieses einstückigen Kunststoffbauteils.

Das Koppelstück weist bevorzugt ein verripptes H-Profil auf. Alternativ kann das Koppelstück aber auch andere geeignete Profile aufweisen.

Die Erfindung betrifft ferner ein Fahrzeug, insbesondere Kraftfahrzeug, mit einem Fahrzeugaufbau, wenigstens einem Achsschenkel, wenigstens einem drehbar an dem Achsschenkel gelagerten Fahrzeugrad, wenigstens einem Radführungslenker, mittels welchem der Achsschenkel bewegbar an dem Fahrzeugaufbau gelagert ist, und wenigstens einem an dem Fahrzeugaufbau gelagerten Wankstabilisator, der mittels einer Koppelstange mit dem Achsschenkel oder mit dem Radführungslenker gelenkig verbunden ist. Bei der Koppelstange handelt es sich insbesondere um eine erfindungsgemäße Koppelstange, die gemäß allen genannten Ausgestaltungen weitergebildet sein kann. Insbesondere ist in dem Gelenkgehäuse unter Ausbildung eines Gelenks ein Gelenkzapfen bewegbar gelagert, wobei die Koppelstange bevorzugt mittels des Lagers an dem Wankstabilisator und mittels des Gelenks an dem Achsschenkel oder an dem Radführungslenker angelenkt ist. Der Gelenkzapfen ist insbesondere ein Kugelzapfen.

Der Radführungslenker ist bevorzugt ein Längslenker, kann aber auch ein Querlenker oder ein anderer Radführungslenker sein.

Die Erfindung betrifft ferner ein Verfahren zum Herstellen einer Koppelstange, wobei eine Baugruppe bestehend aus einer Hülse und einem die Hülse umgebenden oder umringenden Elastomerkörper mit einem ersten Kunststoffmaterial unter Ausbildung eines ein Gelenkgehäuse und ein dazu beabstandetes und die Baugruppe umgebendes Lagergehäuse aufweisenden Grundkörpers umspritzt wird, wobei anschließend zumindest das Lagergehäuse unter Ausbildung einer Ummantelung mit einem zweiten Kunststoffmaterial umspritzt wird, das weicher als das erste Kunststoffmaterial ist. Mittels des erfindungsgemäßen Verfahrens wird insbesondere die erfindungsgemäße Koppelstange hergestellt. Ferner ist der Ausdruck "weicher" insbesondere derart zu verstehen, dass das erste Kunststoffmaterial eine größere mechanische Steifigkeit als das zweite Kunststoffmaterial aufweist.

Bevorzugt wird beim Umspritzen der Baugruppe mit dem ersten Kunststoffmaterial gleichzeitig eine Kugelschale ausgebildet, die von dem Gelenkgehäuse umgeben und/oder in dieses integriert ist. Danach kann in die Kugelschale ein Kugelzapfen eingesetzt werden, so dass ein Kugelgelenk gebildet wird.

Die Herstellung der Koppelstange erfolgt insbesondere im Umsetzverfahren. Somit wird die Baugruppe zunächst in ein erstes Werkzeug eingelegt und in diesem mit dem ersten Kunststoffmaterial umspritzt. Danach wird der Grundkörper aus dem ersten Werkzeug herausgenommen, in ein zweites Werkzeug eingelegt und in diesem mit dem zweiten Kunststoffmaterial umspritzt. Alternativ können auch andere Verfahren zur Herstellung der Koppelstange angewendet werden. Möglich ist z.B. der Einsatz eines Zwei-Komponenten-Verfahrens (2-K-Verfahren) im Rotationsprinzip.

Die Erfindung wird nachfolgend anhand einer bevorzugten Ausführungsform unter Bezugnahme auf die Zeichnung beschrieben. In der Zeichnung zeigen:
- Fig. 1:: eine Seitenansicht einer Koppelstange gemäß einer Ausführungsform der Erfindung,
- Fig. 2:: eine Schnittansicht durch das Lager der Koppelstange nach Fig. 1,
- Fig. 3:: eine Schnittansicht durch die Koppelstange gemäß der Schnittlinie A-A aus Fig. 1 und
- Fig. 4:: eine schematische Ansicht einer Radaufhängung eines Kraftfahrzeugs mit der Koppelstange nach Fig. 1.

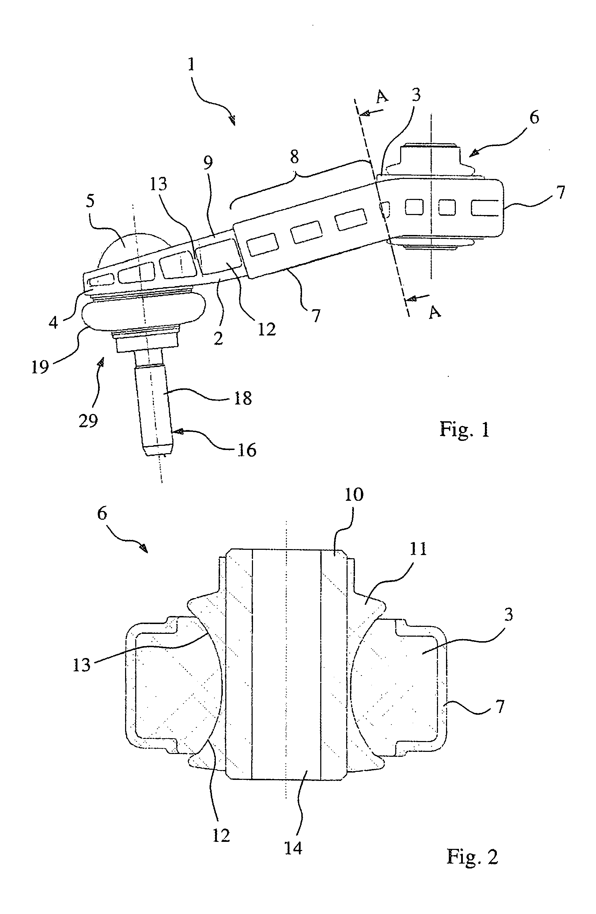

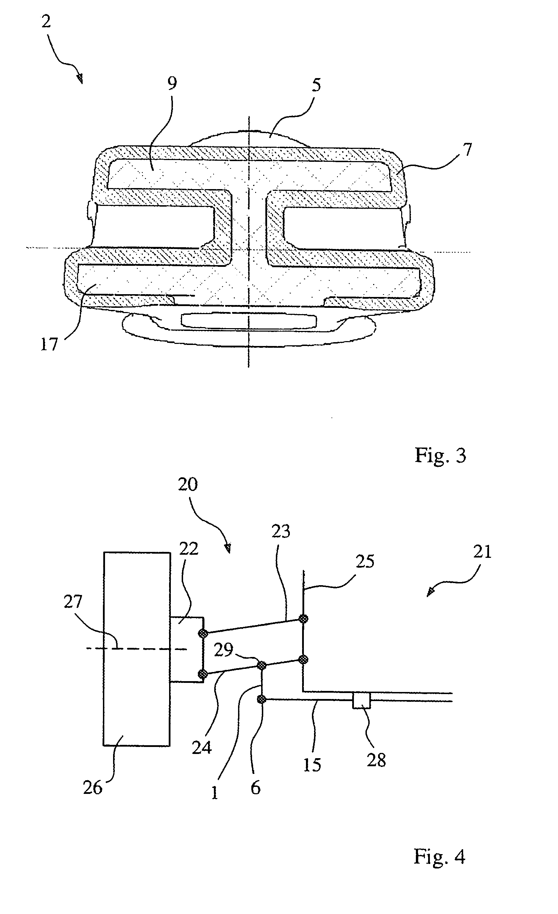

Aus Fig. 1 ist eine Seitenansicht einer Koppelstange 1 gemäß einer Ausführungsform der Erfindung ersichtlich, wobei ein aus einem ersten Kunststoffmaterial hergestellter Grundkörper 2 ein Elastomerlagergehäuse 3, ein Kugelgelenkgehäuse 4, eine in dem Kugelgelenkgehäuse 4 angeordnete oder in diesem integrierte Kugelschale 5 sowie ein Koppelstück 9 aufweist, welches sich zwischen dem Elastomerlagergehäuse 3 und dem Kugelgelenkgehäuse 4 erstreckt und die beiden Gehäuse 3 und 4 miteinander verbindet. Dabei weist das Koppelstück 9 ein verripptes H-Profil 17 (siehe Fig. 3) mit Ausnehmungen 12 und Rippen 13 auf. Das Elastomerlagergehäuse 3, das Kugelgelenkgehäuse 4, die Kugelschale 5 und das Koppelstück 9 bilden zusammen ein einstückiges Kunststoffbauteil, welches den Grundkörper 2 bildet. Das Elastomerlagergehäuse 3 ist Teil eines Elastomerlagers 6 und von einer Ummantelung 7 umgeben, die zusätzlich einen Bereich 8 des Koppelstücks 9 umgibt. Die Ummantelung 7 besteht aus einem zweiten Kunststoffmaterial, das eine geringere mechanische Steifigkeit bzw. Härte als das erste Kunststoffmaterial aufweist.

In der Kugelschale 5 ist ein Kugelzapfen 16 drehbar und schwenkbar gelagert, so dass von dem Kugelgelenkgehäuse 4, der Kugelschale 5 und dem Kugelzapfen 16 ein Kugelgelenk 29 gebildet ist. Der Kugelzapfen 16 weist eine Zapfen 18 auf und erstreckt sich mit diesem aus dem Kugelgelenkgehäuse 4 heraus, an dem ein Dichtungsbalg 19 befestigt ist, der sich zwischen dem Kugelgelenkgehäuse 4 und dem Zapfen 18 erstreckt und an diesem dichtend anliegt.

Aus Fig. 2 ist eine Schnittansicht des Elastomerlagers 6 ersichtlich, wobei eine zylindrische Metallhülse 10 von einem Elastomerkörper 11 umringt und fest mit diesem verbunden ist. Die Hülse 10 und der Elastomerkörper 11 bilden ein Lagerinnenteil oder eine Baugruppe, die sich durch das Elastomerlagergehäuse 3 hindurch und beidseitig aus diesem heraus erstreckt. Ferner ist die Hülse 10 mit einem durchgehenden Loch 14 versehen, in welches ein Bolzen zur Befestigung des Elastomerlagers 6 an einem Wankstabilisator 15 (siehe Fig. 4) eingreifen kann. Die Ummantelung 7 umschließt das Elastomerlagergehäuse 3 formschlüssig und bildet insgesamt einen einstückigen Kunststoffkörper.

Aus Fig. 3 ist eine Schnittansicht durch den Grundkörper 2 entlang der aus Fig. 1 ersichtlichen Schnittlinie A-A ersichtlich, wobei der Kugelzapfen 16 und der Dichtungsbalg 19 nicht dargestellt sind. Deutlich ist das H-Profil 17 des Koppelstücks 9 erkennbar, welches von der Ummantelung 7 umschlossen ist, die der Kontur des H-Profils 17 folgt.

Aus Fig. 4 ist eine schematische Darstellung einer Radaufhängung 20 eines teilweise dargestellten Kraftfahrzeugs 21 ersichtlich, wobei ein Achsschenkel 22 über einen oberen Radführungslenker 23 und einen unteren Radführungslenker 24 an einem Fahrzeugaufbau 25 angelenkt ist. An dem Achsschenkel 22 ist ein Fahrzeugrad 26 um eine Radachse 27 drehbar gelagert. Ferner ist der Stabilisator 15 mittels eines oder mehrerer Lager 28 an dem Fahrzeugaufbau 25 gelagert, wobei ein Ende des Stabilisators 15 mittels der Koppelstange 1 mit dem Radführungslenker 24 verbunden ist. Dabei ist die Koppelstange 1 mittels des Elastomerlagers 6 an dem Stabilisator 15 und mittels des Kugelgelenks 29 an dem Radführungslenker 24 angelenkt.

### Bezugszeichenliste

- 1: Koppelstange
- 2: Grundkörper
- 3: Elastomerlagergehäuse
- 4: Kugelgelenkgehäuse
- 5: Kugelschale
- 6: Elastomerlager
- 7: Ummantelung
- 8: ummantelter Bereich des Koppelstücks
- 9: Koppelstück
- 10: Hülse
- 11: Elastomerkörper
- 12: Ausnehmung im Koppelstück
- 13: Rippe des Koppelstücks
- 14: Loch in Hülse
- 15: Wankstabilisator
- 16: Kugelzapfen
- 17: H-Profil
- 18: Zapfen
- 19: Dichtungsbalg
- 20: Radaufhängung
- 21: Kraftfahrzeug
- 22: Achsschenkel
- 23: oberer Radführungslenker
- 24: unterer Radführungslenker
- 25: Fahrzeugaufbau
- 26: Fahrzeugrad
- 27: Radachse
- 28: Lager für Stabilisator
- 29: Kugelgelenk

## Patentansprüche

1. Koppelstange für ein Fahrzeug, mit einem Grundkörper (2), einem ein Lagergehäuse (3) aufweisenden Lager (6), einem von dem Grundkörper (2) gebildeten Gelenkgehäuse (4), welches einen Abstand zu dem Lagergehäuse (3) aufweist, einem von dem Grundköper (2) gebildeten Koppelstück (9), welches sich zwischen dem Lagergehäuse (3) und dem Gelenkgehäuse (4) erstreckt und die beiden Gehäuse (3, 4) miteinander verbindet, wobei von dem aus einem ersten Kunststoffmaterial bestehenden Grundkörper (2) das Lagergehäuse (3) gebildet ist, welches von einer aus einem zweiten Kunststoffmaterial bestehenden Ummantelung (7) umgeben ist, das weicher als das erste Kunststoffmaterial ist, **dadurch gekennzeichnet, dass**
das Lager (6) eine Hülse (10) und einen die Hülse (10) umringenden Elastomerkörper (11) aufweist, der zwischen der Hülse (10) und dem Lagergehäuse (3) angeordnet ist.

2. Koppelstange nach Anspruch 1, **dadurch gekennzeichnet, dass** zumindest ein sich an das Lagergehäuse (3) anschließender Bereich (8) des Koppelstücks (9) von der Ummantelung (7) umgeben ist.

3. Koppelstange nach Anspruch 1 oder 2, **dadurch gekennzeichnet, dass** die beiden Kunststoffmaterialen aus unterschiedlichen technischen Kunststoffen bestehen.

4. Koppelstange nach einem der vorangehenden Ansprüche, **dadurch gekennzeichnet, dass** das Koppelstück (9) ein verripptes H-Profil (17) aufweist.

5. Koppelstange nach einem der vorangehenden Ansprüche, **dadurch gekennzeichnet, dass** in dem Gelenkgehäuse (4) eine von dem Grundkörper (2) gebildete Kugelschale (5) angeordnet oder integriert ist, in der ein Kugelzapfen (16) bewegbar gelagert ist oder werden kann.

6. Koppelstange nach einem der vorangehenden Ansprüche, **dadurch gekennzeichnet, dass** das Lagergehäuse (3) an einem ersten Ende des Grundkörpers (2) und das Gelenkgehäuse (4) an einem zweiten Ende des Grundkörpers (2) angeordnet ist.

7. Fahrzeug mit einem Fahrzeugaufbau (25), wenigstens einem Achsschenkel (22), wenigstens einem drehbar an dem Achsschenkel (22) gelagerten Fahrzeugrad (26), wenigstens einem Radführungslenker (24), mittels welchem der Achsschenkel (22) bewegbar an dem Fahrzeugaufbau (25) gelagert ist, wenigstens einem an dem Fahrzeugaufbau (25) gelagerten Wankstabilisator (15),
**dadurch gekennzeichnet, dass**
der Wankstabilisator (15) mittels einer Koppelstange (1) nach einem der vorangehenden Ansprüche mit dem Achsschenkel (22) oder mit dem Radführungslenker (24) gelenkig verbunden ist.

8. Fahrzeug nach Anspruch 7, **dadurch gekennzeichnet, dass** in dem Gelenkgehäuse (4) unter Ausbildung eines Gelenks (29) ein Gelenkzapfen (16) bewegbar gelagert ist, wobei die Koppelstange (1) mittels des Lagers (6) an dem Wankstabilisator (15) und mittels des Gelenks (29) an dem Achsschenkel (22) oder an dem Radführungslenker (24) angelenkt ist.

9. Verfahren zum Herstellen einer Koppelstange, wobei eine Baugruppe bestehend aus einer Hülse (10) und einem die Hülse (10) umringenden Elastomerkörper (11) mit einem ersten Kunststoffmaterial unter Ausbildung eines ein Gelenkgehäuse (4) und ein dazu beabstandetes und die Baugruppe umgebendes Lagergehäuse (3) aufweisenden Grundkörpers (2) umspritzt wird, wobei anschließend zumindest das Lagergehäuse (3) unter Ausbildung einer Ummantelung (7) mit einem zweiten Kunststoffmaterial umspritzt wird, das weicher als das erste Kunststoffmaterial ist.

10. Verfahren nach Anspruch 9, **dadurch gekennzeichnet, dass** beim Umspritzen der Baugruppe mit dem ersten Kunststoffmaterial gleichzeitig eine Kugelschale (5) ausgebildet wird, die von dem Gelenkgehäuse (4) umgeben ist.

11. Verfahren nach Anspruch 10, **dadurch gekennzeichnet, dass** in die Kugelschale (5) ein Kugelzapfen (16) eingesetzt wird.

## Claims

1. Coupling rod for a vehicle, having a main body (2), having a bearing (6) which has a bearing housing (3), having a joint housing (4) which is formed by the main body (2) and which is at a distance from the bearing housing (3), having a coupling piece (9) which is formed by the main body (2) and which extends between the bearing housing (3) and the joint housing (4) and connects the two housings (3, 4) to one another, wherein the bearing housing (3) is formed from the main body (2) which is composed of a first plastics material, which bearing housing is surrounded by a casing (7) which is composed of a second plastics material softer than the first plastics material,
**characterized in that**
the bearing (6) has a sleeve (10) and an elastomer body (11) which encircles the sleeve (10) and which is arranged between the sleeve (10) and the bearing housing (3).

2. Coupling rod according to Claim 1, **characterized in that** at least a region (8), which adjoins the bearing housing (3), of the coupling piece (9) is surrounded by the casing (7).

3. Coupling rod according to Claim 1 or 2, **characterized in that** the two plastics materials are composed of different engineering plastics.

4. Coupling rod according to one of the preceding claims, **characterized in that** the coupling piece (9) has an H-shaped profile (17) with ribs.

5. Coupling rod according to one of the preceding claims, **characterized in that** a ball socket (5) which is formed by the main body (2) is arranged or integrated in the joint housing (4), in which ball socket a ball pin (16) is or can be movably mounted.

6. Coupling rod according to one of the preceding claims, **characterized in that** the bearing housing (3) is arranged at a first end of the main body (2) and the joint housing (4) is arranged at a second end of the main body (2).

7. Vehicle having a vehicle body (25), having at least one axle stub (22), having at least one vehicle wheel (26) rotatably mounted on the axle stub (22), having at least one wheel control link (24) by means of which the axle stub (22) is movably mounted on the vehicle body (25), having at least one roll stabilizer (15) mounted on the vehicle body (25),
**characterized in that**
the roll stabilizer (15) is articulatedly connected to the axle stub (22) or to the wheel control link (24) by means of a coupling rod (1) according to one of the preceding claims.

8. Vehicle according to Claim 7, **characterized in that** a joint pin (16) is movably mounted in the joint housing (4) so as to form a joint (29), wherein the coupling rod (1) is articulatedly connected to the roll stabilizer (15) by means of the bearing (6) and to the axle stub (22) or to the wheel control link (24) by means of the joint (29).

9. Method for producing a coupling rod, wherein an assembly composed of a sleeve (10) and of an elastomer body (11) encircling the sleeve (10) is extrusion-coated with a first plastics material so as to form a main body (2), which main body has a joint housing (4) and a bearing housing (3) which is spaced apart from said joint housing and which surrounds the assembly, wherein subsequently, at least the bearing housing (3) is extrusion-coated with a second plastics material, which is softer than the first plastics material, so as to form a casing (7).

10. Method according to Claim 9, **characterized in that**, during the extrusion coating of the assembly with the first plastics material, a ball socket (5) is simultaneously formed which is surrounded by the joint housing (4).

11. Method according to Claim 10, **characterized in that** a ball pin (16) is inserted into the ball socket (5).

## Revendications

1. Barre d'accouplement pour un véhicule, avec un corps de base (2), un palier (6) présentant un boîtier de palier (3), un boîtier d'articulation (4) formé par le corps de base (2), qui présente une distance par rapport au boîtier de palier (3), une pièce d'accouplement (9) formée par le corps de base (2), qui s'étend entre le boîtier de palier (3) et le boîtier d'articulation (4) et qui relie l'un à l'autre les deux boîtiers (3, 4), dans laquelle le boîtier de palier (3) est formé par le corps de base (2) composé d'une première matière plastique et est entouré d'une enveloppe (7) composée d'une deuxième matière plastique, qui est plus souple que la première matière plastique, **caractérisée en ce que** le palier (6) présente une douille (10) et un corps en élastomère (11) entourant la douille (10), qui est disposé entre la douille (10) et le boîtier de palier (3).

2. Barre d'accouplement selon la revendication 1, **caractérisée en ce qu'**au moins une région (8) de la pièce d'accouplement (9) se raccordant au boîtier de palier (3) est entourée par l'enveloppe (7).

3. Barre d'accouplement selon la revendication 1 ou 2, **caractérisée en ce que** les deux matières plastiques se composent de matières plastiques techniques différentes.

4. Barre d'accouplement selon l'une quelconque des revendications précédentes, **caractérisée en ce que** la pièce d'accouplement (9) présente un profil en H nervuré (17).

5. Barre d'accouplement selon l'une quelconque des revendications précédentes, **caractérisée en ce qu'**une coquille sphérique (5) formée par le corps de base (2) est disposée ou intégrée dans le boîtier d'articulation (4), dans laquelle un pivot (16) est ou peut être supporté de façon mobile.

6. Barre d'accouplement selon l'une quelconque des revendications précédentes, **caractérisée en ce que** le boîtier de palier (3) est disposé à une première extrémité du corps de base (2) et le boîtier d'articulation (4) est disposé à une deuxième extrémité du corps de base (2).

7. Véhicule avec une superstructure de véhicule (25), au moins une fusée d'essieu (22), au moins une roue de véhicule (26) montée de façon rotative sur la fusée d'essieu (22), au moins une bielle de direction de roue (24), au moyen de laquelle la fusée d'essieu (22) est montée de façon mobile sur la superstructure de véhicule (25), au moins un stabilisateur de roulis (15) monté sur la superstructure de véhicule (25), **caractérisé en ce que** le stabilisateur de roulis (15) est relié de façon articulée à la fusée d'essieu (25) ou à la bielle de direction de roue (24) au moyen d'une barre d'accouplement (1) selon l'une quelconque des revendications précédentes.

8. Véhicule selon la revendication 7, **caractérisé en ce qu'**un pivot (16) est supporté de façon mobile dans le boîtier d'articulation (4) en formant une articulation (29), dans lequel la barre d'accouplement (1) est articulée au moyen du palier (6) au stabilisateur de roulis (15) et au moyen de l'articulation (29) à la fusée d'essieu (22) ou à la bielle de direction de roue (24).

9. Procédé de fabrication d'une barre d'accouplement, dans lequel on enrobe par projection un module composé d'une douille (10) et d'un corps en élastomère (11) entourant la douille (10) avec une première matière plastique en formant un corps de base (2) présentant un boîtier d'articulation (4) et un boîtier de palier (3) éloigné de celui-ci et entourant le module, dans lequel on enrobe ensuite par projection au moins le boîtier de palier (3) en formant une enveloppe (7) avec une deuxième matière plastique, qui est plus souple que la première matière plastique.

10. Procédé selon la revendication 9, **caractérisé en ce que**, lors de l'enrobage du module avec la première matière plastique, on forme en même temps une coquille sphérique (5), qui est entourée par le boîtier d'articulation (4).

11. Procédé selon la revendication 10, **caractérisé en ce que** l'on introduit un pivot (16) dans la coquille sphérique (5).
